# EUROPEAN PATENT SPECIFICATION

(11) **EP 1 843 665 B1**
(45) Date of publication and mention of the grant of the patent: **18.05.2011**
(21) Application number: 05763964.3
(22) Date of filing: 13.07.2005
(51) Int. Cl.: A23D 9/007

(54) **LOW-TRANS FATS FOR CONFECTIONERY FAT COMPOSITIONS WITH IMPROVED TEXTURE AND CRYSTALLISATION RATE**
FETTE MIT NIEDRIGEM TRANS-FETTGEHALT FÜR SÜSSWAREN-FETTZUSAMMENSETZUNGEN MIT VERBESSERTER TEXTUR UND KRISTALLISATIONSGESCHWINDIGKEIT
COMPOSITIONS DE MATIERES GRASSES A FAIBLE TENEUR EN GRAISSES TRANS AYANT UNE TEXTURE ET UNE VITESSE DE CRISTALLISATION AMELIOREES

(30) Priority: 13.07.2004 EP 04447175
(43) Date of publication of application: 17.10.2007
(73) Proprietor: Fuji Oil Europe, 9042 Gent (BE)
(72) Inventor: CLEENEWERCK, Bernard, B-8301 Knokke-Heist (BE)
(74) Representative: Luys, Marie-José A.H.
(86) International application number: PCT/BE2005/000113
(87) International publication number: WO 2006/005141

(56) References cited:
- EP-A- 1 052 284
- WO-A-98/19554
- WO-A-03/080779
- WO-A-2004/112492
- US-A- 5 470 598
- US-A- 6 033 703
- US-A1- 2004 146 626
- US-B1- 6 210 739

## Description

The present invention relates to a fat composition with an improved crystallisation rate, according to the preamble of the first claim. The present invention further relates to a confectionery fat, a filling, cream, centre or coating containing the fat composition of this invention.

### 1. Background of the invention.

In the production of fat compositions for confectionery applications like fillings, creams and coatings there has been an ongoing search for fats which are characterised by a good creaminess and good melting properties, a quick solidification and a stable texture. To achieve this, until recently, large amounts of hydrogenated liquid oils or hydrogenated olein fractions were incorporated into the confectionery fat, mainly for the reasons that hydrogenated liquid oils and olein fractions are less expensive as compared to other fats, their raw materials are largely available and their processing is less complicated as compared to for example, the fractionation of palm oil. If it is envisaged to obtain products with a steep SFC-profile, the hydrogenation reaction is mostly carried out in the presence of a trans-specific catalyst, for example S-poisoned Ni-catalysts.

Hydrogenated liquid oils or olein fractions usually contain an amount of trans fatty acids, which increase the crystallisation rate of the fat composition containing them. However the often too high trans fatty acids content of hydrogenated liquid oils and olein fractions, has become a health concern, the importance of which is increasing. Although trans fatty acids (TFA) are unsaturated fatty acids, they show undesirable health effects which are comparable to or even worse than saturated fatty acids (SFA). As a consequence, there is an interest to not only control the SFA level of a fat composition, but to control also the sum of the TFA and SFA levels.

WO-A-03080779 discloses a process for the production of a fat composition, which is suitable for use as confectionery fat and which although it shows a steep SFC profile, has a low trans fatty acid content. In the process of WO 03/080779, a fat composition containing palm oil or a palm oil fraction, having a specific composition in terms of triglyceride and diglyceride content, is subjected to a catalytic hydrogenation. The aim of the process is to obtain a first fat the trans and saturated fatty acid content of which is increased to a limited extent upon hydrogenation. The thus obtained first fat is incorporated in a further fat composition, with low trans fatty acid content, for example a soft palm fraction or a liquid oil. Thus, a fat composition is obtained which is suitable for the production of confectionery products showing a good mouth feel.

The fat composition obtainable with the process of WO-A-03080779 provides a solution for the production of confectionery fats low in trans fatty acids. However, these fats, in comparison with fats having a high content of trans fatty acids have the drawback that their crystallisation rate is too low. This is an important disadvantage for confectionery producers, as they aim at operating their production lines at comparable speed when changing from high trans fats to low trans fats. There is thus a clear need to further improve the crystallisation rate of fats having a low trans fatty acid content.

The problem of slow crystallisation of low-trans or trans-free fats is known in the art. The problem of a too slow crystallisation of margarine fats is solved by EP-A-936.870 by adding a crystallisation accelerator consisting of a mixture of triglycerides having fatty acids with different chain lengths. The use of fully hydrogenated high lauric rapeseed oil is particularly preferred. The amount of accelerator used ranges from 0.5 to 10 wt%. However, the use of lauric fats is to be avoided since a slight decomposition of the fat can already result in a soapy flavour. The same applies to WO 98/19554.

EP-A-498.487 solves the problem of improving the crystallisation rate of margarine fats by adding a tempering accelerator which is a triglyceride with a trans-unsaturated fatty acid in the 2-position.

GB-A-1.564.363 discloses a method for accelerating the solidification of melts comprising fats, which comprises dispersing in the melt of the confectionery composition, a crystalline powder of a composition comprising monoacid and/or symmetrical triglycerides, each fatty acid being saturated and having a chain length of at least 10 carbon atoms. Examples of such triglycerides are tripalmitin and tristearin which have melting points of around 61.5 and 67.5°C. The addition of 0.01-1 % by weight based on the fat melt of the accelerator mostly suffices to increase the crystallisation rate to an acceptable level. However, this process is complicated as it requires providing a crystalline powder in the β crystal form of very small particle form, whereby care has to be taken to limit the risk of melting the crystallisation accelerator as it looses its effect upon melting. Moreover, the dispersing in the melt of the crystalline powder involves an additional process step which further complicates the production process of the confectionery product.

EP-A.1.166.639 discloses a process for producing foamed chocolate which does not require the need to use emulsifiers to stabilise the incorporated foams. The process comprises a step of formulating an oil mixture comprising edible fats and oils with tri-saturated fatty acid glycerides containing behenic acid. The latter is obtained by fully hydrogenating high erucic acid rapeseedoil (HEAR). The oil mixtures to which the tri-saturated triglyceride is added is for instance a rapeseed oil, that can be slightly hydrogenated, or a so-called cocoa butter equivalent (CBE) or refined coconut oil. Foamed chocolate can be obtained by adding such cooled oil mixture to molten chocolate followed by a whipping step.

According to US-A-4.726.959 a fat bloom inhibitor can be obtained by interesterifying a blend containing a fat having a high behenic acid content and a liquid oil. The result is a fat with a high content of mixed triglycerides C-20 to C-24 saturated fatty acids and unsaturated C-16 to C-22 fatty acids. This blooming inhibitor can be added to chocolate or to a hard butter.

### 2. Object of the invention.

It is the object of the present invention to provide a fat composition which shows an improved crystallisation rate, where simultaneously the trans fatty acid content can be maintained at a sufficiently low level, which does not adversely affect the taste or structure of the final product in which it is incorporated.

### 3. Description of the invention.

This is achieved according to the present invention with the technical features of the characterising part of the first claim.

Thereto, the fat composition of this invention is characterised in that the fat composition consists of an amount of a first fat with a trans fatty acid content of less than 30 wt. % in which wt. % is expressed with respect to the weight of the first fat and a C-16/C-18 saturated fatty acid weight ratio of at least 6 and a solid fat content at 20°C of at least 35 wt. %, and 0.1 to 5 wt. % with respect to the total weight of the fat composition of a crystallisation accelerating fat which is a triglyceride mixture having an UM weight ratio of at least 5, in which L means saturated fatty acid with at least 18 C atoms, and M means saturated fatty acids containing less than 18 C atoms;

The crystallisation accelerator is preferably added in the molten state to the molten fat composition, so that the crystallisation accelerator - fat mixture can be well homogenised. Melting of the thus obtained blend when incorporating it in a recipe containing other, mostly dry ingredients is also normal practise. With the composition of this invention, no special precautions have to be taken to maintain the crystallisation accelerator in a special crystalline form, to ensure that the crystallisation accelerator maintains its effect.

The inventor has found that if a triglyceride mixture of the said UM ratio is used as accelerator, the fat composition obtained after cooling does not show waxiness, on the contrary it improves in mouthfeel, while it has a positive effect on demoulding after processing.

To obtain optimum crystallisation acceleration combined with a good texture and mouthfeel, the crystallisation accelerator is preferably present in an amount of 0.1 to 5 wt. %, more preferably in an amount of 0.5 to 2 wt. %, with respect to the total weight of the fat composition. In case the concentration of the crystallisation accelerator amounts above 5 wt. %, there is a risk to adversely affecting the mouthfeel. Below a concentration of 0.1 wt. % there is a risk that the crystallisation rate is insufficiently increased.

According to a preferred embodiment, the first fat has a solid fat content at 20°C of at least 45 wt. %, preferably at least 55 wt. %, more preferably at least 60 wt. %. It is further preferred that the first fat is characterised by a solid fat content at 35°C of less than 30 wt. %, preferably less than 25 wt. %, more preferably less than 20 wt. % with respect to the total weight of the first fat. Fats with such SFC-profile give a good melting sensation in the mouth, without waxy feeling, which could be caused by the presence of high melting triglycerides. An example of such a fat is a (hard) palm mid fraction.

To limit the amount of trans fatty acids in the fat composition it is preferred that the first fat has a trans fatty acid content of less than 20 wt. %, preferably less than 15 wt. %, more preferably less than 10 wt. % with respect to the weight of the first fat.

A first fat showing the above described properties may be obtained by using as a first fat a fat which comprises an amount of at least one hydrogenated fat component. Thereby the fat component may be fully hydrogenated, but is preferably only partially hydrogenated, so that it still contains unsaturated fatty acids and the saturated fatty acid content is not unnecessarily increased. The amount of hydrogenated fat present in the first fat may vary between 0 and 100 wt. % with respect to the weight of the first fat.

Within the scope of the present invention, the first fat may consist of one single fat component or may be a blend of two or more different fats. The fat blend to be used as the first fat may contain one or more fat components or a fat blend which have been subjected to a pre-treatment, for example a hydrogenation reaction, an interesterification reaction or a combination of both. Within the scope of the present invention however, the first fat may also be a blend of two or more components, which blend has been subjected to a pre-treatment, for example a hydrogenation or an interesterification reaction or a combination of both.

It is further preferred that the partially hydrogenated fat component of the first fat contains 45 - 95 wt. %, preferably 50 - 85 wt%, more preferably 53 - 75 wt. % of S2U.The starting composition for such fat can for instance be obtained by fractionation so that it will only need a slight partial hydrogenation to obtain a steep melting profile. It is preferred that the partially hydrogenated fat has a trans fatty acid content of less than 30 wt. %, preferably less than 20 wt. %, more preferably less than 15 wt. %, most preferably less than 10 wt. %. Herein the glyceride contents are expressed as wt. % with respect to the total amount of di-and triglycerides of the partially hydrogenated fat component, S means a saturated fatty acid with a hydrocarbon chain length of 14-24 carbon atoms, U means unsaturated fatty acid with a hydrocarbon chain length of 14-24 carbon atoms.

A preferred fat to be used as the first fat has a C-16/C-18 fatty acid weight ratio of at least 7, preferably of at least 7.5, more preferably at least 8. A high C-16/C-18 ratio indicates a high level of fractionation, increasing the C-16 content. A high C-18 content usually results from a high degree of hydrogenation, meaning that the SAFA and TFA content of such fat will be higher.

The first fat is preferably a non-lauric fat and contains less than 5 wt. % of C-12 fatty acids with respect to the weight of the first fat, preferably less than 2 wt. %. The lauric fat content is to be minimised as much as possible as they have a poor compatibility with other fats, causing a drop in SFC-profile and because they show a risk to saponification.

The crystallisation accelerator is preferably characterised by an L/M weight ratio of at least 7, preferably at least 10. Such accelerator has a quite good compatibility with the first fat, without having a negative effect on the SFC-tailing, in spite of its high melting point. Examples of such fats include fully hydrogenated rapeseed or soybean oil.

The crystallisation accelerator preferably has a melting point of at least 45°C, preferably at least 50°C, more preferably at least 55°C, most preferably at least 60°C..

The crystallisation accelerator is preferably a mixture of triglycerides, having a C-22 fatty acid content of at least 5 wt. %, preferably at least 10 wt. %, more preferably at least 20 wt. %, most preferably at least 30 wt. % with respect to the total weight of the crystallisation accelerator.

The crystallisation accelerator is preferably a mixture of triglycerides, having a tri-saturated triglyceride content of at least 50 wt. %, preferably at least 70 wt. %, more preferably at least 90 wt. % with respect to the weight of the crystallisation accelerator.

The process for the production of the fat composition is basically a blending operation, wherein the first fat is fully or partly molten and mixed with the crystallisation accelerator which is also at least partially or fully molten. In the process of the present invention, the crystallisation accelerator may be added to the fat composition which then can be used in confectionery recipes in combination with other ingredients. Upon further processing in a recipe, the fat composition containing the accelerator, is usually re-molten, to blend it with the other ingredients of the recipe. This is clearly different from the method disclosed in GB-A-1.564,363 which comprises dispersing in the melt a crystalline powder of a crystallisation accelerator. The use of crystallisation accelerator according to GB-A-1.564.363 is situated in the final production phase of the confectionery product : the crystalline powder is added to the confectionery mass just before it is fed to the cooling tunnel.

The invention also relates to a confectionery coating the fat phase of which predominantly consists of the above described fat composition .

The method of producing the above-described composition of this invention is characterised in that an amount of the first fat and an amount of the crystallisation accelerator are molten and blended in the molten state.

The present invention is further elucidated in the examples and comparative examples given below.

### Example 1: Preparation and hydrogenation of the starting fat.

A coating fat low in trans fatty acids was prepared from a starting fat which was obtained by mixing an amount of palm oil with two different palm mid fractions (PMF). The first palm mid fraction had an IV of 42, the second palm mid fraction had an IV of 34.5. The fatty acid composition of the starting fat is given in table 1.

### Comparative example I

The starting fat of example 1 was subjected to a catalytic hydrogenation in the presence of a Ni catalyst type Pricat 9910 until a product was obtained which shows the characteristics of comparative example I (table 1).

### Example 2: Preparation of a fat composition with an improved crystallisation rate.

To improve the crystallisation rate of the fat of comparative example I, a fat composition was prepared by blending 99 parts by weight of the fat composition of comparative example I, with 1 part by weight of a crystallisation accelerator, in particular fully hydrogenated high erucic acid rapeseedoil (RPH 70), obtained from Kerry-Bio-science. The latter had a C-22 content of 45 wt. % and a melting point of approx. 70°C.

The crystallisation accelerator was completely molten and added to the molten fat blend. The solid fat content (SFC) of the thus obtained fat composition was determined according to IUPAC method 2.150 a. The solid fat content of example 2 as a function of temperature is given in table 2.

### Comparative example II.

A fat composition was prepared by blending 99 parts by weight of the fat composition of comparative example I, with 1 part of fully hydrogenated palm stearine (FHPS) as crystallisation accelerator. The latter comprises a high amount of monoacid triglyceride and symmetrical triglyceride as is disclosed in GB 1 564 363.

The crystallisation accelerator was completely molten and added to the molten fat blend. Thereafter, the solid fat content (SFC) of the thus obtained fat composition was determined according to IUPAC method 2.150 a. The solid fat content of comparative example II is given in table 2.

**Table 1.**

| **Product** | Starting fat | Comparative example I |
|---|---|---|
| **fatty acid composition** | | |
| C12 | 0,20 | 0,47 |
| C14 | 0,90 | 0,99 |
| C16 | 49,17 | 49,26 |
| C18 | 5,44 | 5,67 |
| C18-1 | 37,06 | 41,62 |
| C18-2 | 6,53 | 1,08 |
| C18-3 | 0,00 | 0,00 |
| C20 | 0,40 | 0,50 |
| **TFA** | 0,54 | 7,27 |
| **C16/C18** | | 8,69 |

**Table 2.**

| Solid Fat composition at indicated temperature | 10°C | 20°C | 25°C | 30°C | 35°C | 40°C |
|---|---|---|---|---|---|---|
| Comparative example I | 92 | 75 | 54.4 | 29.9 | 13.5 | 2.1 |
| Example 2 | 92 | 74.7 | 52.8 | 28.4 | 12.4 | 0.8 |
| Comparative example II | 92.3 | 75.4 | 55.4 | 31.1 | 14.9 | 4.2 |

From the results given in table 2 it can be seen that although the fully hydrogenated high erucic acid rapeseed oil RPH 70 and the fully hydrogenated palm stearine both have a melting point that is significantly higher than the melting point of the fat composition of comparative example I:
- addition of the RPH 70 crystallisation accelerator in Example 2 did not adversely affect the SFC-tailing. To the contrary, addition of the RPH 70 crystallisation accelerator to the fat composition of comparative example I was found to result in a reduced SFC at 40°C
- addition of the fully hydrogenated palm stearine in Comparative Example II on the other hand had a negative effect on the SFC at 40°C.

### Example 3.

Confectionery coatings were prepared using the fat composition of respectively comparative example I and example 2. The recipe used for preparing these coatings is given in table 3.

The coatings were prepared by melting the fat composition of comparative example I and example 2. All ingredients, except part of the fat, were mixed and roll refined. After roll refining the mixed ingredients were further homogenised with the rest of the fat in a mixer with heated jacket at a temperature of 40°C.

With this mixture, tablets were moulded at a temperature of 45°C. After moulding, the tablets were cooled at 5°C. The mould contained 16 tablets. After 5' and with intervals of 5' the tablets were checked for their visual aspects and demoulding properties. The results are given in table 4.

As can be seen from the results in table 4, the coating composition based on the fat composition of example 2 showed far better and quicker demoulding than the coating composition prepared with the fat of comparative example I.

**Table 3.**

| Coating recipe | Amount in weight % |
|---|---|
| Fat | 35 |
| Sugar | 50 |
| Cocoa powder 10/12 | 15 |
| Lecithine | 0.4 |
| Vaniline | 0.02 |

**Table 4.**

| Time Minutes | Comparative Example 1 | Example 2 |
|---|---|---|
| 5' | Very wet | Slightly wet |
| 10' | No loosening | Starts loosening |
| 15' | No demould | 10 demould |
| 20' | 5 demould | All demould |
| 25' | All demould | |

### Example 4.

A coating was prepared with the recipe of example 3. However in this case the tablets were cooled for 30' at 5°C and thereafter for 30' at 15°C, following which the tablets were de-moulded. No tempering was applied. The tablets were stored in an incubator for 1 week at 20°C. Thereafter the tablets were evaluated by a panel of 8 persons on different quality parameters, for which they could give a score from 0 to 4. The results of the evaluation are given in table 5.

**Table 5.**

| Property tested | Comparative Example 1 | Example 2 |
|---|---|---|
| Melting behaviour | 2.4 | 2.7 |
| Hardness | 2.8 | 3.4 |
| Waxiness | 2.4 | 1.9 |
| Best | 1X | 7X |

As can be seen from the results summarised in table 5, tablets made with a coating composition based on the fat composition of example 2 were clearly preferred. In their comments the taste panel described example 2 as more snappy and less waxy when compared to comparative example I.

Thereafter, the tablets were stored for 6 months in three different incubators at a temperature of respectively 20 and 25 °C, and an incubator where they were subjected to a 12 hour temperature cycle of 15 - 25°C. Tablets were checked every month on their visual appearance, in particular on gloss, blooming and recrystallisation. No significant differences could be observed between the products of example 2 vs. comparative example I.

### Comparative example IV.

A low trans coating fat was prepared by hydrogenating a palm mid fraction (PMF) with an IV 42 in the presence of a Ni catalyst type Pricat 9910 until a product was obtained with the properties of comparative sample IV summarised in table 6.

**Table 6.**

| **Product** | PMF | Comparative example 1 |
|---|---|---|
| **IV** | 42,0 | 38,6 |
| **FAC** | | |
| C12 | 0,26 | 0,28 |
| C14 | 1,01 | 1,05 |
| C16 | 50,25 | 50,23 |
| C18 | 5,14 | 5,66 |
| C18-1 | 37,19 | 40,19 |
| C18-2 | 5,11 | 1,86 |
| C18-3 | 0,00 | 0,00 |
| C20 | 0,43 | 0,37 |
| **TFA** | 0,71 | 7,71 |
| **C16/C18** | | 8,87 |

## Claims

1. A fat composition **characterised in that** the fat composition consists of an amount of a first fat with a trans fatty acid content of less than 30 wt. % in which wt. % is expressed with respect to the weight of the first fat and a C-161C-18 saturated fatty acid weight ratio of at least 6 and a solid fat content at 20°C of at least 35 wt. %, and 0.1 to 5 wt. % with respect to the total weight of the fat composition of a crystallisation accelerating fat which is a triglyceride mixture having an L/M weight ratio of at least 5, in which L means saturated fatty acid with at least 18 C atoms, and M means saturated fatty acids containing less than 18 C atoms.

2. A fat composition as claimed in claim 1, **characterised in that** the crystallisation accelerating fat is present in an amount of 0.5 to 2 wt. % with respect to the total weight of the fat composition.

3. A fat composition as claimed in claim 1 or 2, **characterised in that** the first fat has a solid fat content at 20°C of at least 45 wt. %, preferably at least 55 wt. %, most preferably at least 60 wt. %.

4. A fat composition as claimed in any one of claims 1-3, **characterised in that** the first fat is **characterised by** a solid fat content at 35°C of less than 30 wt. %, preferably less than 25 wt. %, more preferably less than 20 wt. % with respect to the total weight of the first fat.

5. A fat composition as claimed in any one of claims 1-4, **characterised in that** the first fat has a trans fatty acid content of less than 20 wt. %, preferably less than 15 wt. %, more preferably less than 10 wt. % with respect to the total weight of the first fat.

6. A fat composition as claimed in any one of claims 1-5, **characterised in that** the first fat has a C-16/C-18 fatty acid weight ratio of at least 7, preferably at least 7.5, most preferably at least 8.

7. A fat composition as claimed in any one of claims 1-6, **characterised in that** the crystallisation accelerating fat has an UM weight ratio of at least 7, preferably at least 10.

8. A fat composition as claimed in any one of claims 1-7, **characterised in that** the first fat contains less than 5 wt. % of C-12 fatty acids with respect to the weight of the first fat, preferably less than 2 wt. %.

9. A fat composition as claimed in any of claims 1-8, **characterised in that** the first fat comprises an amount of at least one hydrogenated fat component.

10. A fat composition as claimed in claim 9, **characterised in that** the at least one hydrogenated fat component is a partially hydrogenated fat.

11. A fat composition as claimed in claim 10, **characterised in that** the partially hydrogenated fat component contains 45 - 95 wt. %, preferably 50 - 85 wt%, more preferably 53 - 75 wt. % of S2U, **in that** the partially hydrogenated fat component has a trans fatty acid content of less than 30 wt. %, preferably less than 20 wt. %, more preferably less than 15 wt. %, most preferably less than 10 wt. %, in which the glyceride contents are expressed as wt. % with respect to the total amount of di-and triglycerides of the partially hydrogenated fat component in which S means a saturated fatty acid with a hydrocarbon chain length of 14-24 carbon atoms, U means unsaturated fatty acid with a hydrocarbon chain length of 14-24 carbon atoms.

12. A fat composition as claimed in any of the claims 1-11, **characterised in that** the crystallisation accelerating fat has a melting point of at least 45°C, preferably at least 50°C, more preferably at least 55°C, most preferably at least 60°C.

13. A fat composition as claimed in any of the claims 1-12, **characterised in that** the crystallisation accelerating fat is a mixture of triglycerides, having a C-22 fatty acid content of at least 5 wt. %, preferably at least 10 wt. %, more preferably at least 20 wt. %, most preferably at least 30 wt. % with respect to the total weight of the crystallisation accelerator.

14. A fat composition as claimed in any one of claims 1-13, **characterised In that** the crystallisation accelerating fat is a mixture of two or more triglycerides, wherein at least 50 wt. % of the triglycerides, preferably at least 70 wt. %, more preferably at least 90 wt. % are trisaturated triglycerides, wt. % being expressed with respect to the weight of the crystallisation accelerator.

15. A process for preparing the fat composition as claimed in any one of claims 1-14, **characterised in that** an amount of the first fat with a trans fatty acid content of less than 30 wt. % in which wt. % is expressed with respect to the weight of the first fat and a C-16/C-18 saturated fatty acid weight ratio of at least 6 and a solid fat content at 20°C of at least 35 wt. % and an amount of the crystallisation accelerating fat which is a triglyceride mixture having an L/M weight ratio of at least 5, in which L means saturated fatty acid with at least 18 C atoms, and M means saturated fatty acids containing less than 18 C atoms, are molten and then blended in the molten state.

16. A method for preparing a confectionery product wherein the fat of any one of claims 1-14 is added as the fat component.

17. A confectionery coating the fat phase of which consists of the fat composition claimed in any one of claims 1-14.

## Patentansprüche

1. Fettzusammensetzung, **dadurch gekennzeichnet, dass** die Fettzusammensetzung aus einer Menge eines ersten Fetts mit einem Transfettsäuregehalt von weniger als 30 Gew.-%, wobei Gew.-% mit Bezug auf das Gewicht des ersten Fetts ausgedrückt ist, und einem Gewichtsverhältnis von gesättigter C-161C-18-Fettsäure von mindestens 6 und einem festen Fettgehalt bei 20°C von mindestens 35 Gew.-% und 0,1 bis 5 Gew.-%, mit Bezug auf das Gesamtgewicht der Fettzusammensetzung, eines kristallisationsbeschleunigenden Fetts, das eine Triglyceridmischung ist, die ein L/M-Gewichtsverhältnis von mindestens 5 aufweist, besteht, wobei L gesättigte Fettsäure mit mindestens 18 C-Atomen bedeutet und M gesättigte Fettsäuren, die weniger als 18 C-Atome enthalten, bedeutet.

2. Fettzusammensetzung nach Anspruch 1, **dadurch gekennzeichnet, dass** das kristallisationsbeschleunigende Fett in einer Menge von 0,5 bis 2 Gew.-% mit Bezug auf das Gesamtgewicht der Fettzusammensetzung vorliegt.

3. Fettzusammensetzung nach Anspruch 1 oder 2, **dadurch gekennzeichnet, dass** das erste Fett einen festen Fettgehalt bei 20°C von mindestens 45 Gew.-%, bevorzugt mindestens 55 Gew.-%, noch bevorzugter mindestens 60 Gew.-% aufweist.

4. Fettzusammensetzung nach einem der Ansprüche 1 - 3, **dadurch gekennzeichnet, dass** das erste Fett durch einen festen Fettgehalt bei 35°C von weniger als 30 Gew.-%, bevorzugt weniger als 25 Gew.-%, noch bevorzugter weniger als 20 Gew.-%, mit Bezug auf das Gesamtgewicht des ersten Fetts, **gekennzeichnet** ist.

5. Fettzusammensetzung nach einem der Ansprüche 1 - 4, **dadurch gekennzeichnet, dass** das erste Fett einen Transfettgehalt von weniger als 20 Gew.-%, bevorzugt weniger als 15 Gew.-%, noch bevorzugter weniger als 10 Gew.-%, mit Bezug auf das Gesamtgewicht des ersten Fetts, aufweist.

6. Fettzusammensetzung nach einem der Ansprüche 1 - 5, **dadurch gekennzeichnet, dass** das erste Fett ein Gewichtsverhältnis von C-16/C-18-Fettsäure von mindestens 7, bevorzugt mindestens 7,5, am bevorzugtesten mindestens 8 aufweist.

7. Fettzusammensetzung nach einem der Ansprüche 1 - 6, **dadurch gekennzeichnet, dass** das kristallisationsbeschleunigende Fett ein L/M-Gewichtsverhältnis von mindestens 7, bevorzugt mindestens 10 aufweist.

8. Fettzusammensetzung nach einem der Ansprüche 1 - 7, **dadurch gekennzeichnet, dass** das erste Fett weniger als 5 Gew.-% C-12-Fettsäuren, mit Bezug auf das Gewicht des ersten Fetts, bevorzugt weniger als 2 Gew.-% enthält.

9. Fettzusammensetzung nach einem der Ansprüche 1 - 8, **dadurch gekennzeichnet, dass** das erste Fett eine Menge von mindestens einer hydrierten Fettkomponente umfasst.

10. Fettzusammensetzung nach Anspruch 9, **dadurch gekennzeichnet, dass** die mindestens eine hydrierte Fettkomponente ein teilweise hydriertes Fett ist.

11. Fettzusammensetzung nach Anspruch 10, **dadurch gekennzeichnet, dass** die teilweise hydrierte Fettkomponente 45 - 95 Gew.-%, bevorzugt 50 - 85 Gew.-%, noch bevorzugter 53 - 75 Gew.-% S2U enthält, dass die teilweise hydrierte Fettkomponente einen Transfettsäuregehalt von weniger als 30 Gew.-%, bevorzugt weniger als 20 Gew.-%, noch bevorzugter weniger als 15 Gew.-%, am bevorzugtesten weniger als 10 Gew.-% aufweist, wobei die Glyceridgehalte als Gewichtsprozent mit Bezug auf die Gesamtmenge an Di- und Triglyceriden der teilweise hydrierten Fettsäure ausgedrückt sind, wobei S eine gesättigte Fettsäure mit einer Kohlenwasserstoffkefitenlänge von 14-24 Kohlenstoffatomen bedeutet, U ungesättigte Fettsäure mit einer Kohlenwasserstoffkettenlänge von 14-24 Kohlenstoffatomen bedeutet.

12. Fettzusammensetzung nach einem der Ansprüche 1-11, **dadurch gekennzeichnet, dass** das kristallisationsbeschleunigende Fett einen Schmelzpunkt von mindestens 45°C, bevorzugt mindestens 50°C, noch bevorzugter mindestens 55°C, am bevorzugtesten mindestens 60°C aufweist.

13. Fettzusammensetzung nach einem der Ansprüche 1 - 12, **dadurch gekennzeichnet, dass** das kristallisationsbeschleunigende Fett eine Mischung von Triglyceriden ist, die einen C-22-Fettsäuregehalt von mindestens 5 Gew.-%, bevorzugt mindestens 10 Gew.-%, noch bevorzugter mindestens 20 Gew.-%, am bevorzugtesten mindestens 30 Gew.-%, mit Bezug auf das Gesamtgewicht des Kristallisationsbeschleunigers, aufweisen.

14. Fettzusammensetzung nach einem der Ansprüche 1-13, **dadurch gekennzeichnet, dass** das kristallisationsbeschleunigende Fett eine Mischung von zwei oder mehreren Triglyceriden ist, wobei mindestens 50 Gew.-% der Triglyceride, bevorzugt mindestens 70 Gew.-%, noch bevorzugter mindestens 90 Gew.-% dreifach gesättigte Triglyceride sind, wobei Gew.-% mit Bezug auf das Gewicht des Kristallisationsbeschleunigers ausgedrückt wird.

15. Verfahren zum Herstellen der Fettzusammensetzung nach einem der Ansprüche 1 - 14, **dadurch gekennzeichnet, dass** eine Menge des ersten Fetts mit einem Transfettsäuregehalt von weniger als 30 Gew.-%, wobei Gew.-% mit Bezug auf das Gewicht des ersten Fetts ausgedrückt ist, und einem Gewichtsverhältnis von gesättigter C-16- : gesättigter C-18-Fettsäure von mindestens 6 und einem festen Fettgehalt bei 20°C von mindestens 35 Gew.-% und eine Menge des kristallisationsbeschleunigenden Fetts, das eine Triglyceridmischung ist, die ein L/M-Gewichtsverhältnis von mindestens 5 aufweist, wobei L gesättigte Fettsäure mit mindestens 18 C-Atomen bedeutet und M gesättigte Fettsäuren, die weniger als 18 C-Atome enthalten, bedeutet, geschmolzen und dann im geschmolzenen Zustand gemischt werden.

16. Verfahren zum Herstellen eines Konfektprodukts, wobei das Fett nach einem der Ansprüche 1 - 14 als Fettkomponente hinzugegeben wird.

17. Konfektbeschichtung, deren Fettphase aus der Fettzusammensetzung nach einem der Ansprüche 1 - 14 besteht.

## Revendications

1. Composition de matières grasses **caractérisée en ce que** la composition de matières grasses consiste en une quantité d'une première matière grasse avec une teneur en acide gras trans de moins de 30 % en poids, % en poids étant exprimés par rapport au poids de la première matière grasse, et un rapport pondéral d'acides gras saturés en C16 - C18 d'au moins 6 et une teneur en matière grasse solide à 20 °C d'au moins 35 % en poids et de 0,1 à 5 % en poids par rapport au poids total de la composition de matières grasses d'une matière grasse accélérant la cristallisation qui est un mélange de triglycérides ayant un rapport pondéral L /M d'au moins 5 dans lequel L représente de l'acide gras saturé avec au moins 18 atomes de C et M représente des acides gras saturés contenant moins de 18 atomes de C.

2. Composition de matières grasses telle que revendiquée dans la revendication 1, **caractérisée en ce que** la matière grasse accélérant la cristallisation est présente dans une quantité de 0,5 à 2 % en poids par rapport au poids total de la composition de matières grasses.

3. Composition de matières grasses telle que revendiquée dans la revendication 1 ou 2, **caractérisée en ce que** la première matière grasse a une teneur en matière grasse solide à 20 °C d'au moins 45 % en poids, de préférence d'au moins 55 % en poids, idéalement d'au moins 60 % en poids.

4. Composition de matières grasses telle que revendiquée dans l'une quelconque des revendications 1-3, **caractérisée en ce que** la première matière grasse est **caractérisée par** une teneur en matière grasse solide à 35 °C de moins de 30 % en poids, de préférence de moins de 25 % en poids, mieux encore de moins de 20 % en poids par rapport au poids total de la première matière grasse.

5. Composition de matières grasses telle que revendiquée dans l'une quelconque des revendications 1 - 4, **caractérisée en ce que** la première matière grasse a une teneur en acide gras trans de moins de 20 % en poids, de préférence de moins de 15 % en poids, mieux encore de moins de 10 % en poids par rapport au poids total de la première matière grasse.

6. Composition de matières grasses telle que revendiquée dans l'une quelconque des revendications 1 - 5, **caractérisée en ce que** la première matière grasse a un rapport pondéral d'acide gras en C16 / C18 d'au moins 7, de préférence d'au moins 7,5, idéalement d'au moins 8.

7. Composition de matières grasses telle que revendiquée dans l'une quelconque des revendications 1-6, **caractérisée en ce que** la matière grasse accélérant la cristallisation a un rapport pondéral L / M d'au moins 7, de préférence d'au moins 10.

8. Composition de matières grasses telle que revendiquée dans l'une quelconque des revendications 1 - 7, **caractérisée en ce que** la première matière grasse contient moins de 5 % en poids d'acides gras de C12 par rapport au poids de la première matière grasse, de préférence moins de 2 % en poids.

9. Composition de matières grasses telle que revendiquée dans l'une quelconque des revendications 1 - 8, **caractérisée en ce que** la première matière grasse comprend une quantité d'au moins un composant de matière grasse hydrogénée.

10. Composition de matières grasses telle que revendiquée dans la revendication 9, **caractérisée en ce que** ledit au moins un composant de matière grasse hydrogénée est une matière grasse partiellement hydrogénée.

11. Composition de matières grasses telle que revendiquée dans la revendication 10, **caractérisée en ce que** le composant de matière grasse partiellement hydrogénée contient 45 - 95 % en poids, de préférence 50 - 85 % en poids, mieux encore 53 - 75 % en poids de S2U, **en ce que** le composant de matière grasse partiellement hydrogénée a une teneur en acides gras trans de moins de 30 % en poids, de préférence de moins de 20 % en poids, mieux encore de moins de 15 % en poids, idéalement de moins de 10 % en poids, dans lequel les teneurs en glycérides sont exprimées en % en poids par rapport à la quantité totale de di et triglycérides du composant de matière grasse partiellement hydrogénée, S représentant un acide gras saturé avec une longueur de chaîne d'hydrocarbures de 14 - 24 atomes de carbone, U représentant un acide gras insaturé avec une longueur de chaîne d'hydrocarbures de 14 - 24 atomes de carbone.

12. Composition de matières grasses telle que revendiquée dans l'une quelconque des revendications 1 - 11, **caractérisée en ce que** la matière grasse accélérant la cristallisation a un point de fusion d'au moins 45 °C, de préférence d'au moins 50 °C, mieux encore d'au moins 55 °C, idéalement d'au moins 60 °C.

13. Composition de matières grasses telle que revendiquée dans l'une quelconque des revendications 1-12, **caractérisée en ce que** la matière grasse accélérant la cristallisation est un mélange de triglycérides, ayant une teneur en acides gras en C22 d'au moins 5 % en poids, de préférence d'au moins 10 % en poids, mieux encore d'au moins 20 % en poids, idéalement d'au moins 30 % en poids par rapport au poids total de l'accélérateur de cristallisation.

14. Composition de matières grasses telle que revendiquée dans l'une quelconque des revendications 1 - 13, **caractérisée en ce que** la matière grasse accélérant la cristallisation est un mélange de deux triglycérides ou plus, dans lequel au moins 50 % en poids des triglycérides, de préférence au moins 70 % en poids, mieux encore au moins 90 % en poids sont des triglycérides trisaturés, les % en poids étant exprimés par rapport au poids total de l'accélérateur de cristallisation.

15. Procédé pour préparer la composition de matières grasses telle que revendiquée dans l'une quelconque des revendications 1 -14, **caractérisé en ce qu'**une quantité de la première matière grasse avec une teneur en acides gras trans de moins de 30 % en poids, les % en poids étant exprimés par rapport au poids de la première matière grasse, et un rapport pondéral d'acides gras saturés en C16 - C18 d'au moins 6 et une teneur en matière grasse solide à 20°C d'au moins 35 % en poids et une quantité de la matière grasse accélérant la cristallisation qui est un mélange de triglycérides ayant un rapport pondéral L/M d'au moins 5 dans lequel L représente de l'acide gras saturé avec au moins 18 atomes de C et M représente des acides gras saturés contenant moins de 18 atomes de C sont fondues et puis mélangées à l'état fondu.

16. Procédé pour préparer un produit de confiserie dans lequel la matière grasse de l'une quelconque des revendications 1-14 est ajoutée en tant que composant de matière grasse.

17. Enrobage de confiserie dont la phase grasse consiste en la composition de matières grasses revendiquée dans l'une quelconque des revendications 1 - 14.
